# EUROPEAN PATENT SPECIFICATION

(11) **EP 0 741 061 B1**
(45) Date of publication and mention of the grant of the patent: **24.02.1999**
(21) Application number: 96106521.6
(22) Date of filing: 25.04.1996
(51) Int. Cl.: B60R 21/20

(54) **Closure for an air bag assembly**
Abdeckung für eine Airbaganordnung
Couvercle pour un assemblage comprenant un sac de sécurité gonflable

(30) Priority: 03.05.1995 US 434022
(43) Date of publication of application: 06.11.1996
(60) Divisional application: 98113377.0
(73) Proprietor: DAVIDSON TEXTRON INC., Dover New Hampshire 03820-1504 (US)
(72) Inventor: Cooper, Robert, Oshawa, Ontario (CA); Ianazzi, Peter, Hampstead, New Hampshire 03841 (US); Nichols, Lawrence R., Dover, New Hampshire 03820 (US); Parker, Thomas, Imperiala, MO 63052 (US)
(74) Representative: Hoeger, Stellrecht & Partner

(56) References cited:
- EP-A- 0 689 968
- DE-A- 2 848 547
- DE-A- 4 139 010
- DE-A- 4 315 853
- DE-A- 4 326 554
- GB-A- 2 262 071
- US-A- 3 887 214
- US-A- 5 066 037
- US-A- 5 195 776
- US-A- 5 238 264
- US-A- 5 292 151
- US-A- 5 303 951
- US-A- 5 306 042
- US-A- 5 308 111

## Description

### BACKGROUND OF THE INVENTION

This invention relates generally to closures for air bag assemblies and more particularly to such closures that include at least one moveable door that closes an air bag deployment opening and is acted upon by an inflatable air bag to stress and separate a layer of foam and a flexible outer skin for forming a deployment path for the air bag.

U.S. Patent 4,852,907 granted to Kouji Shiraki et al August 1, 1989 discloses a pad for an air bag assembly that comprises a covering of smooth material such as polyvinyl chloride that is backed with a foam layer to form a soft cover for an air bag assembly that hides two doors that swing open when an air bag is deployed. The two doors are not connected or otherwise supported so that the doors can be moved inwardly when an inwardly directed force is applied by an occupant on the outer surface of the pad. See also U.S. Patent 4,836,576 granted to Herbert Werner et al June 6, 1989.

U.S. Patent 5,082,310 granted to David J. Bauer January 21, 1992 discloses an air bag closure of the above noted type in which the doors are physically connected together in order to resist inward collapse of the doors when an inwardly directed force is applied by an occupant on the outer surface of the covering. The Bauer arrangement, however, has a drawback in that the physical connection of the doors that resists inward collapse also resists opening Of the doors with the same degree of force.

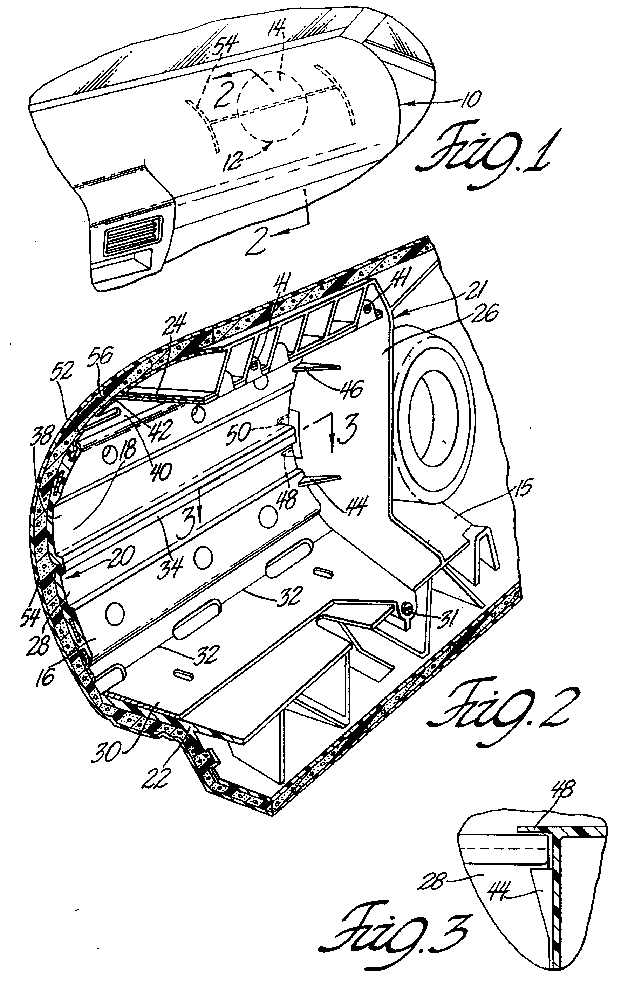

U.S. Patent 5,131,678 granted to John A. Gardner et al July 21, 1992 and U.S. Patent 5,215,330 granted to Kenji Kurita June 1, 1993 disclose air bag closures of the above noted type that utilize an overlap feature to prevent inward movement of the door or doors in response to the inwardly directed force applied by an occupant. While these closure arrangements avoid the drawback of an interconnection, the arrangements are not entirely satisfactory. For instance, the single door arrangement shown in the Gardner '678 patent has an observable seam line. This is particularly true of the embodiment shown in figure 3 that includes a frangible connection for the door that is formed by cutting the panel completely through the skin and foam layers only partly through the backing plate. On the other hand the double door arrangement shown in the Kurita '330 patent does not provide any support for one of the underlying doors.

US patent 5,292,151 discloses a closure for an air bag assembly according to the preamble of claim 1. As the inner retainer member carries the foam layer and the outer layer in overlying relationship to the air bag deployment opening and the moveable door is covered by these layers, the moveable door closing the air bag deployment opening is invisible. However, the moveable door of this closure is not supported against inward movement thereof.

US patent 5,306,042 discloses a closure for an air bag assembly with an inner retainer for supporting a moveable door for free movement thereof from its supported position on the inner retainer. However, the closure disclosed in this document does not comprise a continuous foam layer located within a continuous outer layer that overlie both an inner retainer and a moveable door of the closure. The same holds for the air bag assembly closures disclosed in US patent 5,238,264 and in US patent 5,308,111.

### SUMMARY OF THE INVENTION

It is the object of the present invention to provide a closure for an air bag according to the preamble of claim 1 that supports a moveable door against inward movement thereof and is easy to manufacture.

This object is achieved, according to the invention, by means of the closure of claim 1.

Claims 2 to 9 refer to particular embodiments of the closure according to the invention.

### BRIEF DESCRIPTION OF THE DRAWINGS

The above and other objects, features and advantages of the invention will become more apparent from the following description taken in conjunction with the accompanying drawings wherein like references refer to like parts and wherein:
Figure 1 is a perspective view of a closure for an air bag assembly located within an instrument panel on the passenger side of a motor vehicle;
Figure 2 is an enlarged sectional view taken substantially along the line 2-2 of figure 1 looking in the direction of the arrows; and
Figure 3 is a section taken substantially along the line 3-3 of figure 2 looking in the direction of the arrows.

### DESCRIPTION OF THE INVENTION

Referring now to figures 1 through 3 of the drawing, an instrument panel 10 is illustrated having a closure assembly 12 that covers an air bag assembly 14 of a known type. The closure assembly 12 includes an instrument panel retainer 15 that supports two separate doors 16, 18 that cover an opening 20 through the instrument panel retainer 15. The opening 20 is framed by a rectangular sleeve 21 of the instrument panel retainer 15. The rectangular sleeve 21 comprises two flat, parallel, vertically spaced, elongated side walls 22 and 24 that are connected by a flat vertical side wall 26 at each end, one of which is shown in figure 2.

The retainer 15 is molded of plastic material and the rectangular sleeve 21 is molded as an integral part of the retainer 15.

The door 16 comprises a closure panel 28 of molded thermoplastic material such as a polycarbonate/ABS blend, and a metal insert 30 of steel or aluminum. The metal insert 30 has an offset end portion embedded in an end portion of the closure panel 28 that is increased in thickness to accommodate the offset end of metal insert 30. The opposite end portion of the metal insert 30 is generally flat and shaped so that it engages the lower side wall 22. It has a plurality of generally perpendicular tabs 31 at the edge. One of the tabs 31 is shown in figure 2. The door 16 is attached to the retainer 15 by the tabs 31 and fasteners, such as screws which fasten the tabs 31 of the metal insert 30 to vertical portions of the retainer 15 as shown in figure 2.

The metal insert 30 further comprises an intermediate portion that is angularly shaped and acts as a hinge for swinging the thermoplastic closure panel 28 and the offset end portion of the metal insert 30 that is embedded in the thermoplastic closure panel 28 from the closed vertical position shown in figure 2 to an open horizontal position (not shown) in response to air bag deployment. The hinge action may be defined and/or enhanced in any suitable manner, for instance by creasing the intermediate portion of the metal insert 30 and perforating the intermediate portion with a plurality of elongated holes along the crease to provide a well defined hinge line 32 as shown in figure 2.

The free end of the thermoplastic closure panel 28 has an inward flange 34 to increase the rigidity at the free end of the door 16. The terminus of flange 34 is rounded to avoid injury to the air bag that is part of the air bag assembly 14 when the air bag is deployed.

The door 18 also comprises a closure panel 38 of molded thermoplastic material such as a polycarbonate/ABS blend, and a metal insert 40 of steel or aluminum. The metal insert 40 also has an offset end portion embedded in an end portion of the closure panel 38 that is increased in thickness to accommodate the offset end of the metal insert 30. The opposite end portion of the metal insert 40 is also generally flat shaped so that it engages the upper side wall 24. The metal insert 40 also has generally perpendicular tabs 41 for attaching the door to vertical portion of the retainer 15 by means of the tabs 41 and screws or other suitable fasteners as shown in figure 2.

The metal insert 40 also further comprises an angular intermediate portion that acts as a hinge for swinging the thermoplastic closure panel 38 and the offset end portion of the metal insert 40 embedded in it from the closed vertical position shown in figure 2 to an open horizontal position (not shown). As before the hinge may be enhanced in a suitable manner, such as creasing the intermediate portion of the metal insert 40 and providing a plurality of elongated holes (not shown) along the crease to provide a well defined hinge line 42.

The free end of the thermoplastic closure panel 38 has a rounded inward flange 44 that increases the rigidity at the free end of the door 18 while avoiding damage to the air bag during deployment.

The vertical end walls 26 forming part of the rectangular sleeve 21 of the retainer 15 are each provided with two rear stops 44 and 46 and two front catches 48 and 50 at the surface of the retainer 15 that are purposely weaker than the rear stops 44 and 46. The rear stops 44 (one shown) engage the inner surface of the door 16 at the thick end of the closure panel 28 to support the door 16 against inward movement, such as that caused by an occupant pushing inwardly on the instrument panel in the area of the door 16.

Similarly the rear stops 46 (one shown) engage each end of the door 18 at the thick end of the closure panel 38 to support the door 18 against inward movement, such as that caused by an occupant pushing inwardly on the instrument panel in the area of the door 18. The rear steps 44 and 46 are wedge shaped as shown in figure 3 or otherwise suitably shaped so that the stops 44 and 46 are relatively rigid and shear resistent. The rear stops 44 and 46 are also recessed so that the outer surfaces of the closure panels 28 and 38 do not protrude outwardly of the outer surface of the retainer 15 surrounding the air bag opening 20. This enhances the appearance of the instrument panel 10 and at the same time permits a full thickness of resilient foam material padding over the doors 16 and 18.

The front catches 48 (one shown) engage the outer surface of the door 16 at each end near the free end of the closure panel 28 to hold the door 16 in the closed position shown in figure 2 while the front catches 50 (one shown) engage the outer surface of the door 18 at each end near the free end of the closure panel 38 to hold the door 18 in the closed position shown in figure 2.

The front catches 48 and 50 are designed to hold the doors 16 and 18 closed during the manufacturing process but offer very little if any resistance to the doors 16 and 18 being pushed open by deployment of the air bag. Thus the front catches 48 and 50 are formed as thin webs or otherwise suitably shaped to provide little shear resistance to the opening of the doors 16 and 18 upon deployment of the air bag. While the front catches 48 and 50 may be designed to shear off during air bag deployment, the front catches 48 and 50 are preferably sufficient resilient to allow the doors 16 and 18 to be snapped past the front catches 48 and 50 to the closed position shown in figure 2. Such resilient catches facilitate the manufacturing process by permitting the doors 16 and 18 to be moved to and then held in the closed position of figure 2 while the metal inserts 30 and 40 are fastened to the retainer. This resilient feature also eliminates any debris from the front catches 48 and 50 when the air bag is deployed.

In accordance with the present invention the closure assembly 12 further includes a flexible outer shell or skin layer 52 preferably formed of a thermoplastic polymer such as polyvinyl chloride, thermoplastic urethane or thermoplastic olefin. The skin layer 52 has a weakened seam 54 formed in its interior surface that has an H-shape corresponding to the location of the aligned side edges of the doors 16 and 18 and the location of the juxtaposed front edges of these doors. The space between the retainer 15, doors 16 and 18 and the outer skin layer 52 is filled with a layer of foam material 56 such as urethane foam or polyvinyl chloride foam. The layer of foam material 56 supports the weakened area defined by the weakened seam 54 so as to prevent it from sinking to become visually observable by an occupant. However, in the past it has been difficult to form an underlying support for the foam material that would resist forces imposed on the weakened area of the skin layer 52 from the outside of the instrument panel or other interior trim assembly for a vehicle embodying a cover assembly for an air bag within the air bag assembly.

The arrangement of stops 44, 46 and catches 48, 50 provides a strong underlying support for the foam material 56 via doors 16, 18 while at the same time the arrangement facilitates the manufacturing process particularly in the case in situ formation of the layer of foam material 56 in a manner that does not impede air bag deployment in any significant way.

In order to resist forces imposed on the weakened skin layer 52, the doors 16, 18 of the present invention are supported on the rear stops 44 and 46 which are rigid and shear resistent. Moreover, the thermoplastic closure panels 28 and 38 themselves are relatively rigid and resist deflection. Thus the present invention thereby resists displacement of all portions of the doors 16, 18 inwardly of the instrument panel retainer 15 in a direction toward the air bag in the assembly 14.

Moreover in order to facilitate the manufacturing process, the doors 16 and 18 are held in the closed position by the front catches 48 and 50 so that the doors 16 and 18 are fastened to the substrate 15 easily. The substrate 15 with the doors 16 and 18 attached can then be handled without danger of the doors 16 and 18 opening and being damaged before the outer skin layer 52 and intermediate layer of foam material 56 is in place. As indicated above, the layer of foam material 56 fills the space between the substrate 15 and outer skin layer 52. This is conventionally done by placing the skin layer 52 in a lower mold and attaching the substrate 15 to an upper mold that is closed on the lower mold to form a mold cavity for molding the intermediate layer of foam material 56.

The front catches 48 and 50 also facilitate such an in situ formation of the foam material 56 since the doors 16 and 18 are held in the closed position on the substrate 15 as the foam material 56 is formed in place in the mold cavity.

Furthermore after the closure assembly 12 is completed the front catches 48 and 50 beneath the outer skin layer 52 and the intermediate layer of foam material do not impede air bag deployment in any significant way because the front catches 48 and 50 offer very little if any resistance to the doors 14 and 16 being pushed open by deployment of the air bag.

The operation of the illustrated closure assembly 12 includes directing an inflatant into the air bag causing it to engage the inner surfaces of the doors 16 and 18. The air bag thus forces the doors 16, 18 apart from one another in an outward swinging movement. The doors 16, 18 move from the underlying rear stops 44 and 46 of the instrument panel retainer 15 and either past or through the face catches 48 and 50 depending on their resilience. Each of the doors 16, 18 pivots about its respective hinge line 32, 42 so that the free edges of the doors 16, 18 initially compress the layer of foam material 56 and then stress and separate the layer of foam 56 and the outer skin 52 by directing a separating force along the middle or cross bar segment of the weakened seam 54. At the same time the side edges of the doors 16 and 18 act upwardly on the side segments of the H-shaped weakened seam 54 to break the skin at those locations. Further swinging movement of the doors 16, 18 causes them to separate both the layer of foam material 56 and the outer skin layer 52 to form an opening generally corresponding to the opening 20 formed in the instrument panel retainer 15.

While the invention is disclosed in association with an instrument panel retainer 15, it is equally suitable for use in a cover assembly for an air bag assembly mounted on a steering column to provide drive side protection. For example see U.S. Patent No. 5,131,678 discussed above.

Examples of suitable materials for the outer skin layer includes polyvinyl chloride or other thermoplastic materials such as thermoplastic elastomers or thermoplastic olefins and thermoset materials such as spray urethane.

Examples of suitable foam materials include low modulus elastomers such as reaction injection molded urethane material having a flexural modulus in the range of 20,000-80,000 psi at 75° F. Other comparable urea based or vinyl based foam are equally suitable for use with the invention. The use of inserts with inwardly supported unconnected door or doors can be used with other cover assemblies in which the foam layer is omitted entirely and wherein the cover material is formed by other materials including fabrics (both natural and synthetic), leather and any other material that will provide a desired decorative appearance overlying an air bag assembly.

While the foregoing is a complete description of preferred embodiments of the present invention, it should be understood that various changes and modifications may be made without departing from the spirit and scope of the present invention as set forth in the following claims.

The invention has been described in an illustrative manner, and it is to be understood that the terminology which has been used is intended to be in the nature of words of description rather than of limitation.

Obviously, many modifications and variations of the present invention in light of the above teachings may be made. It is, therefore, to be understood that, within the scope of the appended claims, the invention may be practiced otherwise than as specifically described.

## Claims

1. A closure for an air bag, the closure having an outer layer (52) of polymeric material, a foam layer (56) located within the outer layer (52), an inner retainer member (15) having an air bag deployment opening (20) preformed therein, the inner retainer member (15) carrying the foam layer (56) and the outer layer (52) in overlying relationship to the air bag deployment opening (20) in the inner retainer member (15), and a moveable door (16, 18) covering the air bag deployment opening (20) that is also covered by the outer layer (52) of polymeric material and the foam layer (56),
the moveable door (16, 18) having an end and opposite sides, the end attached to the inner retainer member (15);
the closure characterized by:
the inner retainer member (15) having stops (44, 46) cooperating with the opposite sides of the moveable door (16, 18) for supporting the moveable door (16, 18) against movement inwardly of the inner retainer member (15), and
the inner retainer member (15) having catches (48, 50) cooperating with the opposite sides of the moveable door (16, 18) for retaining the moveable door (16, 18) against movement outwardly of the inner retainer member (15).

2. The closure as defined in claim 1 wherein the stops (44, 46) are depressed so that the door (16, 18) does not protrude outwardly of the inner retainer member (15).

3. The closure as defined in claim 2 wherein the stops (44, 46) are wedge shaped for shear resistance.

4. The closure as defined in claim 2 wherein the stops (44, 46) have a shear resistance and the catches (48, 50) have a shear resistance that is less than the shear resistance of the stops (44, 46).

5. The closure as defined in claim 1 wherein the catches (48, 50) are resilient.

6. The closure as defined in claim 5 wherein the catches (48, 50) are sufficiently resilient to permit the moveable door (16, 18) to snap past the catches (48, 50) to facilitate manufacture and to reduce debris from the catches (48, 50) as a result of air bag deployment.

7. The closure as defined in claim 1 wherein the moveable door (16, 18) is a composite comprising a plastic closure portion (28, 38) and a metal insert (30, 40) embedded in the plastic closure portion (28, 38) at one end for attaching the moveable door (16, 18) to the inner retainer member (15).

8. The closure as defined in claim 1 wherein the moveable door (16, 18) is formed by two door segments, each having an end and opposite sides, the end attached to the inner retainer member (15) and the opposite sides cooperating with the stops (44, 46) and catches (48, 50).

9. The closure as defined in claim 1 wherein each catch (48, 50) comprises a web extending from a portion of the inner retainer member (15) framing the air bag deployment opening (20), each catch (48, 50) engaging an outer surface of the moveable door (16, 18).

## Patentansprüche

1. Eine Abdeckung für ein Airbag, welche Abdeckung eine äußere Schicht (52) aus Polymermaterial, eine innerhalb der äußeren Schicht (52) angeordnete Schaumschicht (56), ein inneres Aufnahmeelement (15) mit einer darin ausgebildeten Airbag-Entfaltungsöffnung (20), wobei das innere Aufnahmeelement (15) die Schaumschicht (56) und die äußere Schicht (52) in einer die Airbag-Entfaltungsöffnung (20) im inneren Aufnahmeelement (15) überlagernden Anordnung trägt, und eine die Airbag-Entfaltungsöffnung (20) abdeckende, bewegbare Türe (16, 18) besitzt, die ebenfalls durch die äußere Schicht (52) aus Polymermaterial und die Schaumschicht (56) bedeckt ist, wobei die bewegbare Türe (16, 18) ein Ende und entgegengesetzte Seiten besitzt und das Ende am inneren Aufnahmeelement (15) angebracht ist, wobei die Abdeckung dadurch gekennzeichnet ist, daß das innere Aufnahmeelement (15) Anschläge (44, 46) besitzt, die zum Abstützen der bewegbaren Türe (16, 18) gegen eine Bewegung in das innere Aufnahmeelement (15) hinein mit den entgegengesetzten Seiten der bewegbaren Türe (16, 18) zusammenwirken, und daß das innere Aufnahmeelement (15) Klauen (48, 50) besitzt, die zum Halten der bewegbaren Türe (16, 18) gegen eine Bewegung aus dem inneren Aufnahmeelement (15) hinaus mit den entgegengesetzten Seiten der bewegbaren Türe (16, 18) zusammenwirken.

2. Die Abdeckung gemäß Anspruch 1, wobei die Anschläge (44, 46) versenkt sind, sodaß die Türe (16, 18) aus dem inneren Aufnahmeelement (15) nicht nach außen vorsteht.

3. Die Abdeckung gemäß Anspruch 2, wobei die Anschläge (44, 46) wegen der Scherfestigkeit keilförmig sind.

4. Die Abdeckung gemäß Anspruch 2, wobei die Anschläge (44, 46) eine Scherfestigkeit besitzen und die Klauen (48, 50) eine Scherfestigkeit besitzen, die kleiner ist als die Scherfestigkeit der Anschläge (44, 46).

5. Die Abdeckung gemäß Anspruch 1, wobei die Klauen (48, 50) elastisch sind.

6. Die Abdeckung gemäß Anspruch 5, wobei die Klauen (48, 50) ausreichend elastisch sind, um die bewegbare Türe (16, 18) hinter den Klauen (48, 50) einschnappen zu lassen, um die Herstellung zu erleichtern und um den als Ergebnis der Entfaltung des Airbags von den Klauen (48, 50) stammenden Abrieb zu verringern.

7. Die Abdeckung gemäß Anspruch 1, wobei die bewegbare Türe (16, 18) ein zusammengesetzter Bauteil ist mit einem Kunststoffabdeckteil (28, 38) und einem Metalleinsatz (30, 40), der zum Anbringen der bewegbaren Türe (16, 18) am inneren Aufnahmeelement (15) in den Kunststoffabdeckteil (28, 38) an einem Ende eingebettet ist.

8. Die Abdeckung gemäß Anspruch 1, wobei die bewegbare Türe (16, 18) von zwei Türsegmenten gebildet wird, die jeweils ein Ende und entgegengesetzte Seiten besitzen, wobei das Ende am inneren Aufnahmeelement (15) angebracht ist und die entgegengesetzten Seiten mit den Anschlägen (44, 46) und Klauen (48, 50) zusammenwirken.

9. Die Abdeckung gemäß Anspruch 1, wobei jede Klaue (48, 50) einen Steg besitzt, der sich von einem Teil des die Airbag-Entfaltungsöffnung (20) umrahmenden, inneren Aufnahmeelementes (15) wegerstreckt, wobei jede Klaue (48, 50) an einer äußeren Fläche der bewegbaren Türe (16, 18) angreift.

## Revendications

1. Fermeture pour un coussin d'air, la fermeture comportant une couche externe (52) constituée d'un matériau polymère, une couche de mousse (56) située à l'intérieur de la couche externe (52), un élément de maintien interne (15) comportant une ouverture de déploiement de coussin d'air (20) préformée dans celui-ci, l'élément de maintien interne (15) supportant la couche de mousse (56) et la couche externe (52) en relation de recouvrement avec l'ouverture de déploiement de coussin d'air (20) dans l'élément de maintien interne (15), et une porte mobile (16, 18) recouvrant l'ouverture de déploiement de coussin d'air (20) qui est également recouverte par la couche externe (52) du matériau polymère et par la couche de mousse (56),
la porte mobile (16, 18) comportant une extrémité et des côtés opposés, l'extrémité étant fixée à l'élément de maintien interne (15) ;
la fermeture étant caractérisée par :
l'élément de maintien interne (15) possédant des butées (44, 46) coopérant avec les côtés opposés de la porte mobile (16, 18) pour supporter la porte mobile (16, 18) vis à vis du déplacement vers l'intérieur de l'élément de maintien interne (15), et
l'élément de maintien interne (15) possédant des arrêts (48, 50) coopérant avec les côtés opposés de la porte mobile (16, 18) pour maintenir la porte mobile (16, 18) vis à vis du déplacement vers l'extérieur de l'élément de maintien interne (15).

2. Fermeture selon la revendication 1, dans laquelle les butées (44, 46) sont enfoncées de sorte que la porte (16, 18) ne dépasse pas vers l'extérieur de l'élément de maintien interne (15).

3. Fermeture selon la revendication 2, dans laquelle les butées (44, 46) sont en forme de coins pour la résistance à la rupture.

4. Fermeture selon la revendication 2, dans laquelle les butées (44, 46) possèdent une résistance à la rupture et les arrêts (48, 50) possèdent une résistance à la rupture qui est inférieure à la résistance à la rupture des butées (44, 46).

5. Fermeture selon la revendication 1, dans laquelle les arrêts (48, 50) sont élastiques.

6. Fermeture selon la revendication 5, dans laquelle les arrêts (48, 50) sont suffisamment élastiques pour permettre à la porte mobile (16, 18) de s'encliqueter devant les arrêts (48, 50) pour faciliter la fabrication et pour réduire les débris provenant des arrêts (48, 50) comme résultat du déploiement de coussin d'air.

7. Fermeture selon la revendication 1, dans laquelle la porte mobile (16, 18) est un composite comprenant une partie de fermeture en matière plastique (28, 38) et un insert métallique (30, 40) encastré dans la partie de fermeture en matière plastique (28, 38) à une extrémité pour fixer la porte mobile (16, 18) à l'élément de maintien interne (15).

8. Fermeture selon la revendication 1, dans laquelle la porte mobile (16, 18) est formée par deux segments de porte, chacun ayant une extrémité et des côtés opposés, l'extrémité étant fixée à l'élément de maintien interne (15) et les côtés opposés coopérant avec les butées (44, 46) et les arrêts (48, 50).

9. Fermeture selon la revendication 1, dans laquelle chaque arrêt (48, 50) comprend une bande s'étendant à partir d'une partie de l'élément de maintien interne (15) encadrant l'ouverture de déploiement de coussin d'air (20), chaque arrêt (48, 50) mettant en prise une surface externe de la porte mobile (16, 18).
